Europäisches Patentamt

European Patent Office

Office européen des brevets

(11) Numéro de publication: **0 443 954 B1**

## (12) FASCICULE DE BREVET EUROPEEN

(45) Date de publication de fascicule du brevet: **12.10.94**　(51) Int. Cl.⁵: **B23K 35/363**, H01M 2/28

(21) Numéro de dépôt: **91400469.2**

(22) Date de dépôt: **21.02.91**

(54) **Flux de soudage pour accessoires de batterie d'accumulateurs au plomb.**

(30) Priorité: **23.02.90 FR 9002281**

(43) Date de publication de la demande:
**28.08.91 Bulletin 91/35**

(45) Mention de la délivrance du brevet:
**12.10.94 Bulletin 94/41**

(84) Etats contractants désignés:
**AT BE CH DE DK ES FR GB GR IT LI LU NL SE**

(56) Documents cités:
**FR-A- 1 304 479　　FR-A- 2 178 013**
**GB-A- 400 609　　　US-A- 2 095 335**
**US-A- 3 424 625　　US-A- 4 428 780**

**CHEMICAL ABSTRACTS & INDEXES, vol. 85,
partie2, 12 juillet 1976, abrégé no. 9474v,
Columbus, Ohio, US; & JP-A-50 021 308
(ASAHI GLASS) 22-07-1975**

**WPI/DERWENT, 1979, semaine 44, accession
no. 79-79991B, Derwent PublicationsLtd, London, GB; & JP-A-54 122 835 (KOBE)
22-09-1979**

(73) Titulaire: **COMPAGNIE EUROPEENNE D'AC-
CUMULATEURS Société anonyme dite:**
**18, Ouai de Clichy**
**F-92111 Clichy Cedex (FR)**

(72) Inventeur: **Jacq, Bernard**
**13, avenue Salengro**
**F-78340 Les Clayes Sous Bois (FR)**

(74) Mandataire: **Weinmiller, Jürgen et al**
**Lennéstrasse 9**
**Postfach 24**
**D-82336 Feldafing (DE)**

## Description

La présente invention concerne un flux de soudage pour accessoires de batterie d'accumulateurs au plomb.

Un tel flux est en particulier nécessaire pour décaper les queues des plaques des accumulateurs et leur enlever toute trace d'oxyde et de carbonate, avant l'opération de soudure avec des barres de connexion ou autre. L'opération de soudure peut être éventuellement précédée d'un étamage des queues de plaques.

Dans le procédé de soudage dit "au renversé", le bloc de plaques est maintenu avec les queues de plaques orientées vers le bas ; ces dernières passent dans le bain de flux, le cas échéant dans un bain d'étain fondu, et ensuite à un poste de soudage où les accessoires concernés se trouvent à l'état fondu dans des moules.

Un flux se compose d'une part d'un acide, appelé couramment "agent de décapage", et d'autre part d'au moins un produit organique, tel qu'une amine, désigné sous le nom "d'agent de fluxage". Le flux habituellement utilisé pour la soudure "au renversé" des accessoires pour batteries d'accumulateurs au plomb comporte un mélange d'acide bromhydrique et d'hydrazine (voir par exemple FR-A-1304 479).

La demanderesse a constaté qu'un tel flux avait un effet néfaste sur l'auto-décharge de la batterie.

D'autres flux constitués par exemple d'acide phosphorique ou d'acide oxalique et de triéthanolamine peuvent être utilisés. Les observations micrographiques réalisées aux différentes étapes de l'opération de soudage ont mis en évidence qu'avec ces produits on obtient, par rapport à la solution d'acide bromhydrique et d'hydrazine précitée, un revêtement d'étamage moins régulier et moins adhérent sur les queues de plaques, d'où une médiocre qualité de la soudure "au renversé".

La présente invention a pour but de mettre en oeuvre une composition de flux permettant d'éviter ces inconvénients.

La présente invention a pour objet un flux de soudage pour accessoires de batterie d'accumulateurs au plomb comprenant au moins un acide et au moins une amine, caractérisé par le fait que ledit acide est choisi parmi l'acide sulfamique, l'acide orthophosphorique, et l'acide oxalique et que ladite amine est choisie parmi l'hydrazine, la diéthylamine, la dibutylamine et la diméthylamine.

Ce flux peut être une solution aqueuse avec des concentrations s'étendant depuis des valeurs très faibles jusqu'aux limites de solubilité. Il peut se trouver également à l'état pâteux.

Selon un mode de réalisation préférentiel, les proportions d'acide et d'amide sont telles qu'il subsiste une acidité libre dans le mélange.

Ainsi, dans le cas du mélange de l'acide sulfamique avec une amine, telle que l'hydrazine par exemple, le rapport des concentrations est de préférence de l'ordre de 2/1.

La présente invention a également pour objet un procédé de mise en oeuvre du flux de soudage selon les termes de la revendication 6.

Il peut être avantageux d'effectuer l'opération de "fluxage" à une température pouvant aller jusqu'à environ 100°C. Ceci peut être réalisé par chauffage du bain de flux ou par réchauffage des queues des plaques, par exemple à l'air chaud.

D'autres caractéristiques et avantages de la présente invention apparaîtront au cours de la description suivante de modes de réalisation donnés à titre illustratif mais nullement limitatif. Dans le dessin annexé :

- les figures 1A à 1E montrent très schématiquement les étapes essentielles du procédé de soudage "au renversé" des queues de plaques d'une batterie d'accumulateurs au plomb,
- la figure 2 montre des courbes d'auto-décharge à 40°C d'un accumulateur témoin, d'un accumulateur de l'art antérieur, et de trois accumulateurs selon l'invention ; on a reporté en ordonnées la tension V en volts et en abscisses le temps t en jours,
- la figure 3 montre des courbes d'auto-décharge à 40°C de l'accumulateur témoin et de quatre autres accumulateurs selon l'invention.

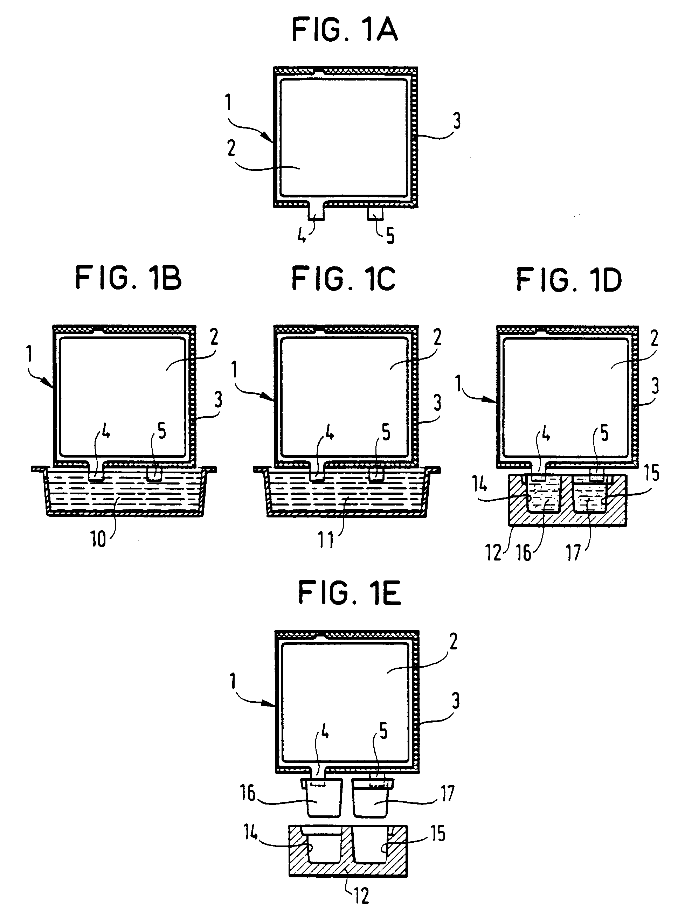

On voit dans la figure 1A un bloc 1 comprenant un empilement de plaques positives 2, et de plaques négatives avec des séparateurs 3 interposés. Le bloc 1 est en position renversée, autrement dit les queues 4 et 5 des plaques positives et négatives se trouvent à la partie inférieure du bloc, contrairement à leur position normale.

Avant d'être soudées à leurs barres de connexion respectives, les queues de plaques 4 et 5 sont plongées dans un bain de flux 10 dont on précisera plus loin les diverses compositions (figure 1B). Elles passent ensuite dans un bain d'étain fondu 11 (figure 1C), puis dans les deux cavités 14 et 15 d'un moule 12 contenant un alliage de plomb fondu (figure 1D). Ces deux cavités correspondent à deux barres de connexion 16 et 17 apparaissant soudées aux queues de plaques 4 et 5 dans la figure 1E.

Afin de tester l'influence de la nature du bain de flux 10 sur l'auto-décharge d'un accumulateur on réalise plusieurs accumulateurs étanches comportant chacun dans un bac une plaque positive, deux plaques négatives, deux séparateurs et un volume d'électrolyte correspondant à un taux de remplissage de 95%. Chaque élément est passé sous vide et muni d'une soupape. Le test d'auto-décharge s'effectue sans recharge à 40°C pendant trois semaines environ.

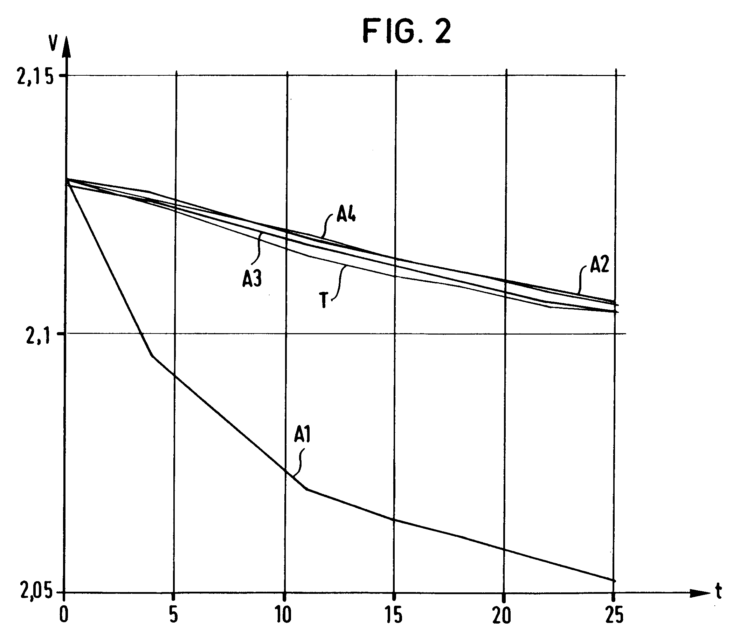

Dans un accumulateur témoin T, les soudures des queues de plaques aux connexions sont réalisées manuellement sans utilisation de flux. La figure 2 montre la courbe d'auto-décharge T de cet accumulateur.

Pour les accumulateurs des exemples qui suivent, on opère conformément aux schémas des figures 1A à 1E avec diverses compositions de flux.

EXEMPLE 1 (Art Antérieur)

Le flux est une solution contenant de l'acide bromhydrique 4,2M et de l'hydrazine 2,3M.
La figure 2 montre la courbe d'auto-décharge A1 de cet accumulateur.

EXEMPLE 2

On donne au bain de flux 10 la composition suivante:

| - Acide sulfamique | 2,0M |
| - Hydrazine | 1,0M |

L'accumulateur $A_2$ réalisé avec mise en oeuvre de ce flux présente une courbe d'auto-décharge $A_2$.

EXEMPLE 3

On donne au bain de flux 10 la composition suivante:

| - Acide phosphorique | 3,3M |
| - Hydrazine | 2M |

L'accumulateur $A_3$ réalisé avec la mise en oeuvre de ce flux présente une courbe d'auto-décharge $A_3$.

EXEMPLE 4

On donne au bain de flux la composition suivante:

| - Acide oxalique | 1,6M |
| - Hydrazine | 4M |

L'accumulateur $A_4$ réalisé avec la mise en oeuvre de ce flux présente une courbe d'auto-décharge $A_4$.

Les exemples précédents font apparaîtrent nettement que les courbes d'auto-décharge $A_2$, $A_3$, $A_4$ sont très proches de la courbe T et que l'inconvénient présenté par le flux de l'art antérieur a disparu.

On ne constate par ailleurs aucun effet néfaste des flux selon l'invention ni sur la charge des accumulateurs, ni sur leur corrosion, ni sur leur fonctionnement, ni sur leur cyclage.

EXEMPLES 5 à 8

On prépare trois bains de flux contenant tous les trois de l'acide sulfamique 2M et respectivement:
- de l'hydrazine 1M (Accumulateur $A_5$)
- de la diméthylamine 0,5N (Accumulateur $A_5$)
- de la dibutylamine 0,5N (Accumulateur $A_7$)
- de la diéthylamine 1N (Accumulateur $A_5$)

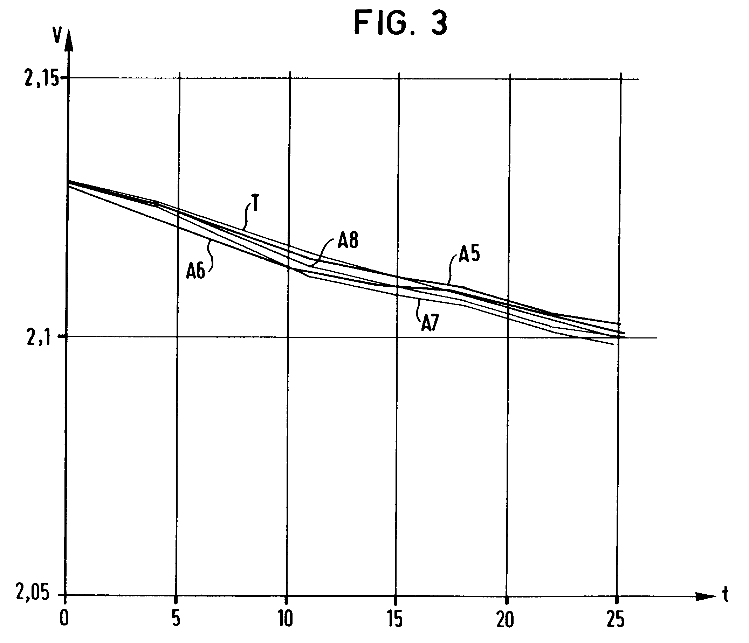

Les courbes d'auto-décharge correspondantes référencées $A_5$, $A_5$, $A_7$, $A_5$ dans la figure 3, montrent que les amines choisies ne modifient pas la cinétique de l'auto-décharge.

De préférence le flux comporte une quantité d'acide telle qu'il subsiste toujours dans le mélange une acidité libre.

3

**EP 0 443 954 B1**

Dans ces conditions, les concentrations d'acide et d'amine peuvent varier dans de larges proportions.

Le tableau I donne une série d'exemples de concentrations en moles/litre de flux à l'état de solution aqueuse.

TABLEAU I

| ACIDE | | | AMINES | | |
|---|---|---|---|---|---|
| Oxalique | Sulfamique | Phos-phorique | Hydra-zine | Diméthyl-amine | Dibutyl-amine |
| 0,8 | | | 2 | | |
| 1,6 | | | 4 | | |
| | 2 | | 1 | | |
| | 1 | | 0,5 | | |
| | 4 | | 3 | | |
| | 10 | | 10 | | |
| | | 3,5 | 2 | | |
| | | 3 | 1 | | |
| | | 5 | 2 | | 1 |
| | | 7,5 | 5 | | |
| | 4 | | 1 | 0,5 | 0,5 |
| | 2 | 2 | 2 | | |
| | 3 | 1 | 2 | 1 | |

Le tableau II donne une série d'exemples de concentrations pour des flux de type solution sursaturée ou pâteuse.

4

| A C I D E  (g)  * | | A M I N E  (cm3) | |
|---|---|---|---|
| Oxalique | Sulfamique | Hydrazine | Diméthylamine |
| 5 | | 2 | |
| 5 | | | 2 |
| 5 | | 1 | 3 |
| | 5 | 2 | |
| | 5 | | 1 |

\* Acide cristallisé pur

– Hydrazine hydratée à 98%

– Diméthylamine à 40%

Bien entendu l'invention n'est pas limitée aux exemples décrits.

**Revendications**

1.  Flux de soudage pour accessoires de batterie d'accumulateurs au plomb comprenant au moins un acide et au moins une amine, caractérisé par le fait que ledit acide est choisi parmi l'acide sulfamique, l'acide orthophosphorique, et l'acide oxalique et que ladite amine est choisie parmi l'hydrazine, la diéthylamine, la dibutylamine, la diméthylamine.

2.  Flux de soudage selon la revendication 1, caractérisé par le fait qu'il est sous forme de solution aqueuse.

3.  Flux de soudage selon la revendication 1, caractérisé par le fait que les concentrations d'acide et d'amine sont telles qu'il se trouve à l'état pâteux.

4.  Flux de soudage selon l'une des revendications précédentes, caractérisé par le fait que les proportions d'acide et d'amine sont telles qu'il subsiste une acidité libre dans le mélange.

5.  Flux de soudage selon l'une des revendications 1, 2, 4, caractérisé par le fait qu'il comprend de l'acide sulfamique et une amine dans un rapport de concentrations de l'ordre de 2/1.

6.  Procédé de mise en oeuvre du flux pour le soudage d'accessoires de batterie d'accumulateurs au plomb selon l'une des revendications 1 à 5, caractérisé par le fait que l'opération de "fluxage" est effectuée à une température pouvant aller jusqu'à environ 150°C, de préférence jusqu'à 100°C environ.

7.  Procédé de mise en oeuvre selon la revendication 6, caractérisé par le fait que ledit flux est chauffé.

8.  Procédé de mise en oeuvre selon la revendication 6, caractérisé par le fait que les queues des plaques de ladite batterie d'accumulateurs destinées à être soudées auxdits accessoires sont préchauffées, par exemple à l'air chaud.

**EP 0 443 954 B1**

**Claims**

1. Flux for soldering lead-acid accumulator battery accessories comprising at least one acid and at least one amine characterised in that said acid is selected from sulphamic acid, orthophosphoric acid and oxalic acid and in that said amine is selected from hydrazine, diethylamine, dibutylamine and dimethylamine.

2. Soldering flux according to claim 1 characterised in that it is the form of an aqueous solution.

3. Soldering flux according to claim 1 characterised in that the concentrations of acid and amine are such that it is in the form of a paste.

4. Soldering flux according to any one of the preceding claims characterised in that the proportions of acid and amine are such that there is residual free acidity in the mixture.

5. Soldering flux according to any one of claims 1, 2 and 4 characterised in that it comprises sulphamic acid and an amine in a ratio of concentrations in the order of 2/1.

6. Method of using the flux for soldering lead-acid accumulator battery accessories according to any one of claims 1 to 5 characterised in that the "fluxing" operation is carried out a temperature of up to approximately 150°C, preferably up to approximately 100°C.

7. Method of use according to claim 6 characterised in that said flux is heated.

8. Method of use according to claim 6 characterised in that the tails of the plates of said accumulator battery to be soldered to said accessories are pre-heated, for example using hot air.

**Patentansprüche**

1. Flußmittel zum Anlöten von Zubehörteilen an eine Bleiakkumulatorbatterie, das mindestens eine Säure und mindestens ein Amin enthält, dadurch gekennzeichnet, daß die Säure ausgewählt wird aus Sulfamidsäure, Orthophosphorsäure und Oxalsäure und daß das Amin ausgewählt wird aus Hydrazin, Diäthylamin, Dibutylamin, Dimethylamin.

2. Flußmittel nach Anspruch 1, dadurch gekennzeichnet, daß es in wässriger Lösung vorliegt.

3. Flußmittel nach Anspruch 1, dadurch gekennzeichnet, daß die Säure- und Aminkonzentrationen derart sind, daß es sich im pastenförmigen Zustand befindet.

4. Flußmittel nach einem der vorhergehenden Ansprüche, dadurch gekennzeichnet, daß die Anteile an Säure und Amin derart sind, daß ein freier Säuregehalt in der Mischung verbleibt.

5. Flußmittel nach einem der Ansprüche 1, 2, 4, dadurch gekennzeichnet, daß es Sulfamidsäure und ein Amin in einem Konzentrationsverhältnis von 2/1 enthält.

6. Verfahren zur Anwendung des Flußmittels beim Anlöten von Zubehörteilen an eine Bleiakkumulatorbatterie nach einem der Ansprüche 1 bis 5, dadurch gekennzeichnet, daß der Vorgang der Flußmittelbenetzung bei einer Temperatur durchgeführt wird, die bis zu etwa 150°C, vorzugsweise bis zu etwa 100°C reichen kann.

7. Verfahren nach Anspruch 6, dadurch gekennzeichnet, daß das Flußmittel erwärmt wird.

8. Verfahren nach Anspruch 6, dadurch gekennzeichnet, daß die Plattenfahnen der Akkumulatorbatterie, an die die Zubehörteile angelötet werden sollen, vorgewärmt werden, zum Beispiel mit heißer Luft.

6

# FIG. 1A

# FIG. 1B          FIG. 1C          FIG. 1D

# FIG. 1E

FIG. 2

EP 0 443 954 B1

FIG. 3

9